# FASCICULE DE BREVET EUROPEEN

(11) **EP 4 214 121 B1**
(45) Date de publication et mention de la délivrance du brevet: **23.10.2024**
(21) Numéro de dépôt: 21785962.8
(22) Date de dépôt: 16.09.2021
(51) Int. Cl.: B64D 1/02, B64D 45/00, B64F 5/60

(54) **DISPOSITIF DE CONVOYAGE ET DE LARGAGE À INDICATEUR DE PRÉSENCE DE CARTOUCHE**
FÖRDER- UND FREIGABEVORRICHTUNG MIT PATRONEPRÄSENZANZEIGE
TRANSPORT AND RELEASE DEVICE WITH A CARTRIDGE PRESENCE INDICATOR

(30) Priorité: 17.09.2020 FR 2009411
(43) Date de publication de la demande: 26.07.2023
(73) Titulaire: Aresia-Valenton, 94460 Valenton (FR)
(72) Inventeur: HAMELIN, Arnaud, 94460 Valenton (FR); BLONDEL, Victor, 94460 Valenton (FR)
(74) Mandataire: Cabinet Netter
(86) Numéro de dépôt international: PCT/FR2021/051586
(87) Numéro de publication internationale: WO 2022/058687

(56) Documents cités:
- GB-A- 2 155 597
- GB-A- 2 443 706
- US-A- 5 088 664

## Description

L'invention concerne le domaine des dispositifs de convoyage et de largage aéronautique, notamment des éjecteurs, et en particulier pyrotechniques. Les éjecteurs sont des dispositifs de convoyage et de largage pour aéronef pouvant alternativement retenir et libérer sur commande un engin, aussi connu sous le nom de charge. Les éjecteurs sont destinés à être montés sur des aéronefs à voilure fixe ou tournante, typiquement des avions armés, des hélicoptères ou des drones. Un tel éjecteur est montré par exemple dans le document GB2443706.

Un éjecteur est typiquement installé en partie basse d'un aéronef, par exemple sous un fuselage ou sous une aile. L'éjecteur reçoit un engin qu'il retient en vol. L'éjecteur loge en outre deux cartouches pyrotechniques logées dans une chambre. A la réception d'une commande de séparation, l'éjecteur active, ou tire, la cartouche pyrotechnique. L'éjecteur libère alors l'engin, puis pousse l'engin à distance de l'aéronef, en général verticalement.

La cartouche doit être changée après une mission. Après un vol, un opérateur au sol vérifie la présence d'une cartouche non tirée pour chaque chambre. Pour ce faire, l'opérateur doit suivre une procédure stricte relative à la manipulation d'engin pyrotechnique de type I, puis ouvre la chambre de l'éjecteur pour vérifier l'état de la cartouche. Si la cartouche est non tirée, l'opérateur retire la cartouche et dépose la cartouche dans un conteneur dédié à l'entreposage de cartouches non activées. Compte tenu du risque d'inflammation rapide, la vérification de l'état d'une cartouche doit être réalisée avant tout autre opération de maintenance sur l'éjecteur. Ceci empêche d'autres opérateurs de s'approcher d'une zone sécuritaire autour de l'éjecteur et de sa charge tant que l'état d'une cartouche n'a pas été vérifié. La vérification est dangereuse pour l'opérateur, même bien protégé. Il existe un besoin de sécurisation du personnel au sol.

L'invention vient améliorer la situation.

L'invention vise à diminuer les risques encourus par l'être humain dans la préparation et le retour de mission.

A ces fins, l'invention propose un dispositif de convoyage et de largage aéronautique actionné par une cartouche pyrotechnique, ledit dispositif comprenant un ensemble pyrotechnique, ledit ensemble comprenant au moins :
- un corps dans lequel est ménagé un logement, ledit corps comprenant un évidement, l'évidement présentant une extrémité ouverte et un fond, et
- un adaptateur de cartouche apte à fermer l'évidement et formant une chambre pouvant loger la cartouche,
caractérisé en ce que :
- le dispositif comprend un indicateur monté, sur une face extérieure du corps, mobile entre une première position et une deuxième position,
- l'adaptateur de cartouche comprend une culasse apte à être vissée dans le logement de sorte qu'
   en présence de cartouche pyrotechnique, la culasse peut être vissée jusqu'à une première profondeur où la culasse vient en butée contre la cartouche pyrotechnique, la cartouche pyrotechnique étant en butée contre le fond de l'évidement, et
   en l'absence de cartouche pyrotechnique, la culasse peut être vissé jusqu'à une deuxième profondeur supérieure à la première profondeur, et
- la culasse à la première profondeur interdit la première position à l'indicateur, tandis que la culasse à la deuxième profondeur laisse libre en mouvement l'indicateur.

L'invention permet de vérifier, à l'état chambre fermée équipée de ses adaptateurs cartouches, la présence d'une cartouche. Pour ce faire, un opérateur au sol soulève en maintenant l'indicateur de présence cartouche et visse jusqu'au contact l'adaptateur cartouche avec le fond de la chambre obturant celle-ci. Ensuite, l'opérateur peut relâcher l'indicateur de présence cartouche. Si l'indicateur arrive jusqu'à la première position, alors il n'y a pas de cartouche dans la chambre, et l'opérateur peut ouvrir la chambre. Au contraire, si l'indicateur est bloqué avant d'arriver à la première position, cela signifie que la cartouche est présente dans la chambre. Il convient alors de retirer la cartouche en prenant les précautions nécessaires.

La vérification est rapide. Comme la chambre demeure fermée lors de la vérification, la sécurité pour l'opérateur est grandement renforcée. Cela évite à l'opérateur de suivre des procédures contraignantes ainsi que le port d'équipements de protection pyrotechnique adaptés. L'opérateur est protégé contre d'éventuelles brûlures en cas d'inflammation accidentelle de la cartouche, car la cartouche est confinée dans la chambre. La vérification de la présence de la cartouche est plus rapide. Les tâches au sol peuvent ainsi être menées en parallèle. Cela aboutit à une réduction du temps d'immobilisation au sol de l'aéronef entre deux missions. On peut en outre réaliser d'ultimes vérifications avant mission, car la vérification de présence d'une cartouche est rapide et ne nécessite pas de matériel contraignant. Ceci est particulièrement avantageux par augmentation de la disponibilité des aéronefs..

Le dispositif peut présenter un ou plusieurs des aspects suivants.

Dans un mode de réalisation, l'adaptateur de cartouche forme une butée pour un rebord de la cartouche pyrotechnique lorsque la culasse est vissée à la première profondeur en présence de la cartouche pyrotechnique. La cartouche est tenue en place.

Dans un mode de réalisation, la chambre présente deux extrémités opposées, l'une formée par un fond, l'autre formée par la culasse, une extrémité de la cartouche pyrotechnique venant en butée contre le fond lorsque la cartouche pyrotechnique est logée dans la chambre, la culasse venant en butée contre l'extrémité opposée de la cartouche lorsque la culasse est vissée à la première profondeur.

Dans un mode de réalisation, en l'absence d'une cartouche, la culasse peut être vissée en butée contre une pièce de fond de l'adaptateur de cartouche. La culasse peut être vissée à une profondeur supérieure que lors de la présence d'une cartouche.

Dans un mode de réalisation, l'indicateur comprend une palette montée à rotation dans le corps à proximité de l'extrémité ouverte de l'évidement. La palette est visible par un opérateur.

Dans un mode de réalisation, la palette est de forme générale plane et montée dans un évidement ménagé dans une face extérieure du dispositif, notamment en retrait ou affleurante.

Dans un mode de réalisation, la culasse comprend un boîtier central comprenant une première jupe et une partie de tête, et un bouchon. La culasse vient entourer en partie la cartouche.

Dans un mode de réalisation, l'adaptateur de cartouche comprend une pièce de fond comprenant une partie radiale et une deuxième jupe apte à venir en prise avec la première jupe, pour former la chambre, le bouchon étant apte à venir en prise avec la partie de tête, l'adaptateur de cartouche étant apte à être séparé du corps tout en conservant la cartouche pyrotechnique.

Dans un mode de réalisation, le dispositif comprend une portion d'éjection, apte à pousser un engin reçu par le dispositif lorsqu'une cartouche logée dans l'adaptateur de cartouche est activée.

Dans un mode de réalisation, le fond de l'évidement ou de l'adaptateur de cartouche comprend au moins un orifice reliant l'adaptateur de cartouche à la portion d'éjection.

Dans un mode de réalisation, le dispositif comprend un indicateur de tir renseignant sur un état tiré ou un état non tiré du dispositif. L'opérateur prend connaissance visuellement de l'état tiré ou non tiré.

Dans un mode de réalisation, un procédé de vérification d'un dispositif vu ci-dessus, comprend au moins le groupe d'étapes suivant :
1a) soulever l'indicateur de présence cartouche
1b) visser l'adaptateur de cartouche dans le logement jusqu'à venir en butée,
1c) relâcher l'indicateur de présence cartouche, et
1d) déterminer si l'indicateur de présence cartouche atteint la première position.

Dans un mode de réalisation, un procédé de vérification d'un dispositif vu ci-dessus, comprend le groupe d'étapes suivant :
2a) déplacer l'indicateur de présence cartouche à une troisième position,
2b) retirer l'adaptateur de cartouche,
2c) ouvrir l'adaptateur de cartouche,
2c) insérer une cartouche dans la chambre, puis refermer l'adaptateur de cartouche,
2d) déplacer l'indicateur de présence cartouche, puis remonter l'adaptateur de cartouche muni de la cartouche dans le logement,
2e) relâcher l'indicateur de présence cartouche

Dans un mode de réalisation, un procédé de vérification d'un dispositif vu ci-dessus, comprend le groupe d'étapes suivant :
3a) si l'indicateur de présence cartouche est dans la première position, retirer l'adaptateur de cartouche, et terminer la vérification,
3b) si l'indicateur est à distance de la première position, en particulier en deuxième position, vérifier l'état de l'indicateur de tir, puis :
   3c) si l'indicateur de tir est dans l'état tiré, alors retirer l'adaptateur de cartouche, ouvrir la chambre pour retirer la cartouche, sinon réaliser une procédure de retrait d'une cartouche non tirée, et terminer la vérification.

D'autres caractéristiques et avantages de l'invention seront exposés en détail dans la description ci-après, faite en référence aux dessins annexés, sur lesquels :
- [Fig. 1] est une vue en perspective d'un éjecteur selon un aspect de l'invention, cartouche en place,
- [Fig. 2] est une vue de droite en élévation de l'éjecteur de la figure 1,
- [Fig. 3] est une vue en perspective de l'intérieur de l'éjecteur de la figure 1,
- [Fig. 4] est une vue de l'ensemble pyrotechnique de l'éjecteur de la figure 3,
- [Fig. 5] est une vue de la chambre pyrotechnique de l'ensemble-pyrotechnique de la figure 4,
- [Fig. 6] est une vue de face de la chambre pyrotechnique de la figure 5,
- [Fig. 7] est une vue du détail VII de la figure 2,
- [Fig. 8] est une vue de l'éjecteur de la figure 7 selon la coupe VIII-VIII,
- [Fig. 9] est une vue de l'éjecteur avec cartouche selon la même coupe,

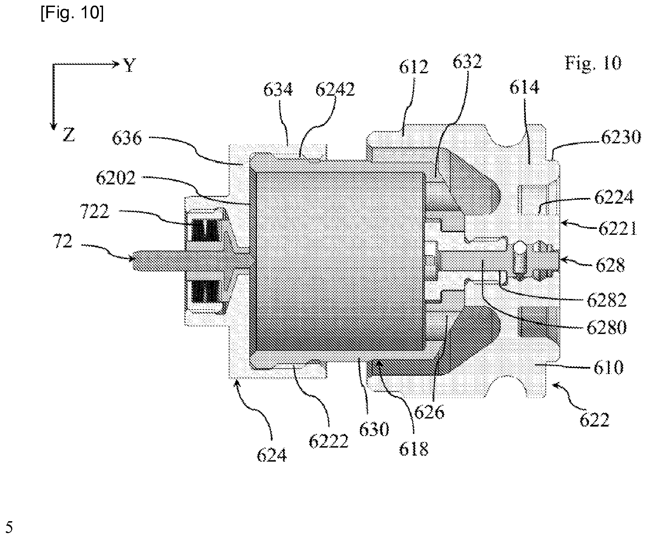

- [Fig. 10] est une vue de l'éjecteur sans cartouche selon la même coupe.

Les dessins annexés contiennent, pour l'essentiel, des éléments de caractère certain. Ils pourront donc non seulement servir à mieux faire comprendre la présente invention, mais aussi contribuer à sa définition, le cas échéant.

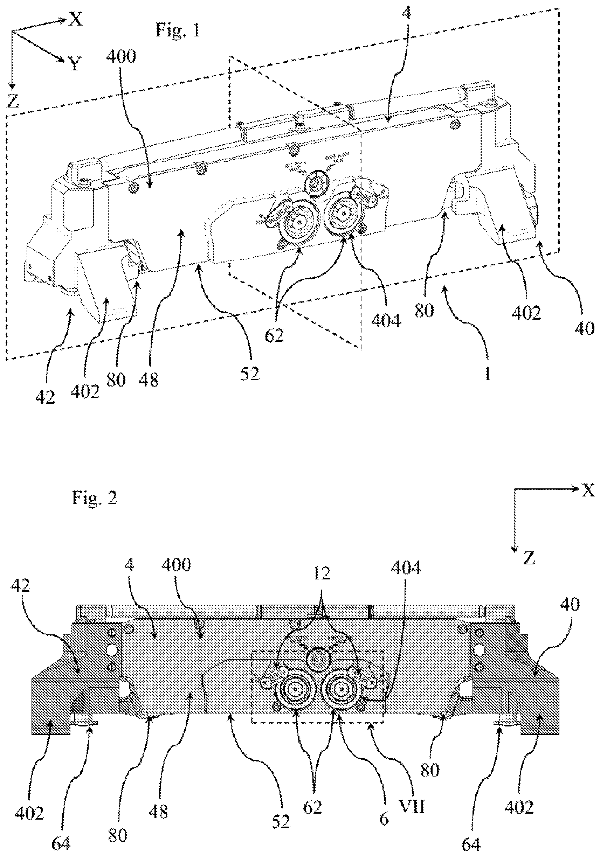

Les figures 1 à 3 représentent un éjecteur 1 selon un aspect de l'invention.

L'éjecteur 1 est destiné à être accroché à un aéronef, par exemple un avion de chasse, et à recevoir un engin (non représenté) à libérer, aussi appelé charge. L'éjecteur 1 reçoit l'engin durant un chargement (au sol) et se sépare dudit engin, soit durant un largage ou une éjection en vol, soit en retour de mission pour un remplacement de la charge.

L'engin comporte sur l'une de ses parois une paire de saillies de retenue, par exemple en forme d'anneau ou de T. L'éjecteur 1 vient en prise avec lesdites saillies de retenue au chargement de l'éjecteur 1. L'éjecteur 1 retient alors l'engin. Au largage, l'éjecteur 1 libère les saillies de retenue de l'engin, puis pousse l'engin dans une direction de poussée Z. L'engin est éjecté. L'énergie d'éjection est fournie par au moins une cartouche pyrotechnique 2 installée dans l'éjecteur 1 de manière remplaçable.

L'éjecteur 1 s'étend le long d'une direction X perpendiculaire à la direction de poussée Z, d'une portion d'extrémité avant 40 à une portion d'extrémité arrière 42. L'éjecteur 1 est généralement symétrique par rapport à un premier plan (Y, Z) orthogonal à la direction X en ce sens que les saillies de retenue sont retenues dans la portion d'extrémité avant 40 et dans la portion d'extrémité arrière 42.

Dans le mode de réalisation décrit ici, l'éjecteur 1 présente une allure allongée le long de la direction X. Ici, l'éjecteur 1 est généralement symétrique par rapport à un deuxième plan (X, Z) parallèle aux directions X et Z.

L'éjecteur 1 présente une première face latérale et une deuxième face latérale 48 parallèles, opposées selon une direction Y orthogonale au plan (X, Z). Sur les figures, la direction Z est orientée vers le bas. Ici, l'éjecteur 1 présente une allure généralement plane par rapport à la direction Y.

L'éjecteur 1 présente une face inférieure 52, perpendiculaire à la direction Z. L'engin reçu par l'éjecteur 1 est en regard de la face inférieure 52. Les saillies de retenue de l'engin sont espacées selon la direction X.

L'éjecteur 1 comprend un bâti 4. Le bâti 4 comprend deux longerons 400, aussi appelés boîtiers. Les longerons 400 sont parallèles et disposés à distance l'un de l'autre selon la direction Y. Un premier des deux longerons 400 forme la première face latérale. Le deuxième des deux longerons 400 forme la deuxième face latérale 48.

Le bâti 4 comprend une pluralité de pattes 402, ici au nombre de quatre. Les pattes 402 sont agencées en partie basse du bâti 4, du côté de la face inférieure 52. Ici, une première paire de pattes 402 est agencée près de l'extrémité avant 40 et une autre paire de pattes 402 est agencée près de l'extrémité arrière 42.

Les pattes 402 sont destinées à venir en butée contre l'engin, lorsque l'engin 2 est reçu par l'éjecteur 1. Les pattes 402 améliorent la stabilité de l'engin en fournissant des appuis éloignés les uns des autres.

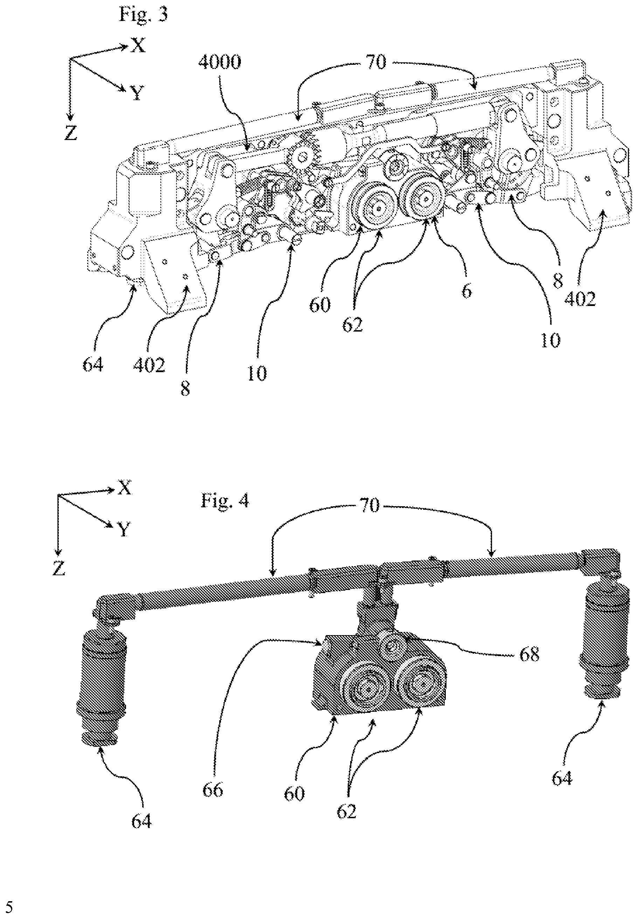

Les longerons 400 définissent entre eux l'intérieur du bâti 4. L'éjecteur 1 comprend, reçus dans l'intérieur du bâti 4, un ensemble pyrotechnique 6, un ensemble de crochet 8 et un ensemble de verrouillage10, visibles en particulier sur la figure 3.

L'ensemble pyrotechnique 6 comprend un corps 60, au moins un adaptateur de cartouche 62, une paire de pistons d'éjection 64 et un piston de déverrouillage 66.

Le corps 60 est disposé vers le centre de l'éjecteur 1. Dans le corps 60 est ménagé au moins un logement, notamment par usinage. Dans chacun desdits au moins un logement est installé un desdits adaptateurs de cartouche 62. Chaque adaptateur de cartouche 62 est apte à stocker une cartouche pyrotechnique 2. Chaque adaptateur de cartouche 62 peut être alternativement ouvert et fermé. Dans le mode de réalisation décrit ici, deux logements sont prévus dans le corps pour deux adaptateurs de cartouche 62. Les adaptateurs de cartouche 62 sont agencés parallèlement selon la direction Y et juxtaposés.

Chaque adaptateur de cartouche 62 est typiquement de forme générale de révolution autour d'un axe selon la direction Y. L'intérieur de chaque adaptateur de cartouche 62 est accessible depuis l'extérieur lorsque l'adaptateur de cartouche 62 est ouvert, de sorte à pouvoir y insérer et en retirer une cartouche pyrotechnique 2. Ici, l'accès aux logements des adaptateurs de cartouche 62 se fait depuis le côté droit du bâti 4, à travers une ouverture 404 débouchant sur la première face latérale. L'ouverture 404 est formée dans le longeron 400 de droite.

Les pistons d'éjection 64 sont disposés à l'avant et à l'arrière du bâti 4. Les pistons d'éjection 64 font saillie de la face inférieure 52, de part et d'autre des logements selon la direction X. Ici, les pistons d'éjection 64 sont disposés à proximité des portions d'extrémité 42 et 44 et des pattes 402, voir figure 2.

Chaque piston d'éjection 64 est relié fluidiquement aux adaptateurs de cartouche 62. Chaque cartouche pyrotechnique 2, une fois enflammée, dégage un gaz sous pression. Puis le gaz sous pression s'écoule de chaque adaptateur de cartouche 62 vers les pistons d'éjection 64. Puis les pistons d'éjection 64 se déploient du bâti 4 vers le bas, ce par quoi les pistons d'éjection 64 éjectent l'engin.

L'ensemble de crochet 8 est agencé pour alternativement retenir et libérer l'engin. L'ensemble de crochet 8 présente un premier état dans lequel l'ensemble de crochet 8 est fermé et retient l'engin. L'ensemble de crochet 8 présente un deuxième état dans lequel l'ensemble de crochet 8 est ouvert et libère l'engin. L'ensemble de crochet 8 est mobile entre ses deux états.

L'ensemble de crochet 8 comprend un crochet 80 agencé à proximité de la portion d'extrémité avant 40 et un autre crochet 80 agencé à proximité de la portion d'extrémité arrière 42. Chacun des crochets 80 est conçu pour venir en prise avec l'une des saillies de retenue de l'engin.

Lorsque l'ensemble de crochet 8 est dans son premier état, chaque crochet 80 est dans une position fermée dans laquelle le crochet 80 retient la saillie de retenue respective de l'engin. Les crochets 80 sont verrouillés. Lorsque l'ensemble de crochet 8 est dans son deuxième état, chaque crochet 80 est dans une position ouverte dans laquelle le crochet 80 libère ou peut accueillir la saillie de retenue respective de l'engin. Les crochets 80 sont déverrouillés.

L'ensemble de verrouillage 10 est agencé pour verrouiller et déverrouiller les crochets 80 de l'ensemble de crochet 8. L'ensemble de verrouillage 10 est agencé entre le corps 60 et les crochets 80. L'ensemble de verrouillage 10 est agencé de part et d'autre du corps 60 le long de la direction X. L'ensemble de verrouillage 10 est actionnable par le piston de déverrouillage 66, ce par quoi l'ensemble de verrouillage 10 déverrouille les crochets 80.

L'éjecteur 1 comprend à proximité de chaque adaptateur de cartouche 62 un indicateur visuel 12 respectif de présence de cartouche pyrotechnique 2. L'indicateur 12 est disposé, au moins en partie, sur l'un des longerons 400, ici le longeron 400 à droite de l'éjecteur 1. L'indicateur 12 est visible et accessible au moins en partie depuis l'extérieur du bâti 4.

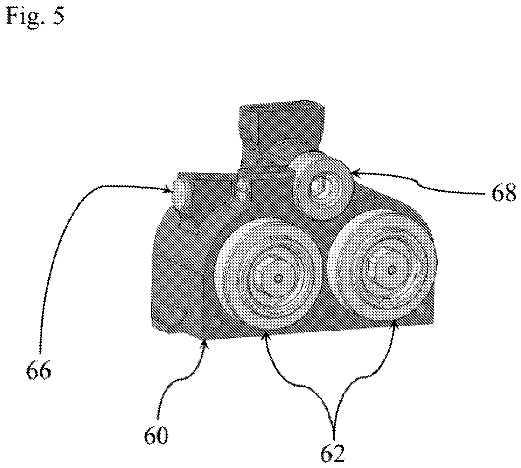

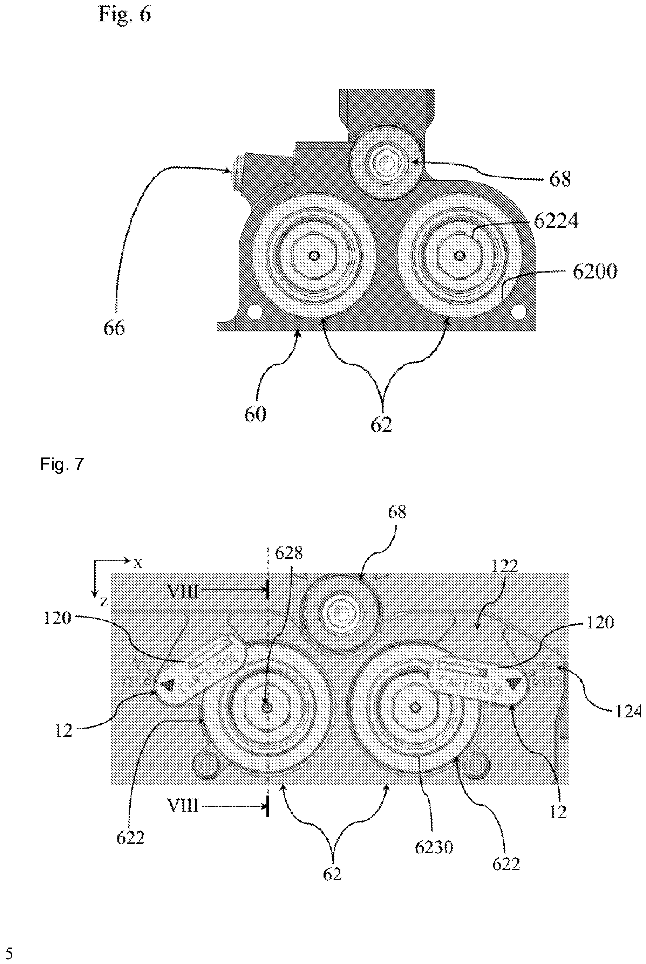

La figure 4 représente l'ensemble pyrotechnique 6 et les figures 5 et 6 représentent le corps 60 équipé.

L'ensemble pyrotechnique 6 comprend une vanne 68 et, pour chaque piston d'éjection 64, une conduite respective 70 allongée longitudinalement selon l'axe X. La vanne 68 est ici cylindrique et agencée parallèlement aux logements des adaptateurs de cartouche 62. La vanne 68 est agencée en communication fluidique avec les logements. La vanne 68 répartit le gaz sous pression issu des adaptateurs de cartouches 62 après un allumage desdites cartouches 2 entre les deux conduites 70. Chaque conduite 70 relie fluidiquement le piston d'éjection 64 respectif à la vanne 68. Le gaz sous pression issu des cartouches 2 s'écoule à travers les adaptateurs de cartouche 62 vers la vanne 68, puis dans les conduites 70 vers les pistons d'éjection 64.

L'ensemble pyrotechnique 6 comprend un picot de mise à feu 72 pour chaque adaptateur de cartouche 2. Chaque picot de mise à feu 72 est agencé pour activer une cartouche pyrotechnique 2 logée dans l'adaptateur de cartouche 62 respectif.

Le piston de déverrouillage 66 est agencé dans le corps 60. Le piston de déverrouillage 66 est en communication fluidique avec les logements. Le piston de déverrouillage 66 est disposé à proximité des logements. Ici, le piston de déverrouillage 66 est agencé selon un axe perpendiculaire aux axes des logements. Le piston de déverrouillage 66 est monté à translation dans un cylindre ménagé dans le corps 60 au-dessus de l'un des logements. Le piston de déverrouillage 66 est situé entre ledit logement et l'une des conduites 70. Le piston de déverrouillage 66 est perpendiculaire à l'axe de la vanne 68. Le piston de déverrouillage 66 est voisin de la vanne 68.

Le piston de déverrouillage 66 forme un actionneur de libération de l'engin. Lorsqu'au moins une des cartouches pyrotechniques 2 est enflammée, le gaz sous pression issu de la cartouche pyrotechnique 2 s'écoule directement vers le piston de déverrouillage 66. Le gaz sous pression pousse le piston de déverrouillage 66 en saillie du corps 60. Le piston de déverrouillage 66 entraîne l'ensemble de verrouillage 10, lequel à son tour entraîne l'ensemble de crochets 8. L'ensemble de crochets 8 libère l'engin.

Les pistons d'éjection 64 sont disposés de sorte que du gaz sous pression issu de la vanne 68 atteigne chaque piston d'éjection 64 sensiblement en même temps. Le piston de déverrouillage 66 est disposé fluidiquement plus proche de la cartouche pyrotechnique 2 que les pistons d'éjection 64, de sorte que du gaz sous pression actionne le piston de déverrouillage 66 avant d'actionner les pistons d'éjection 64. Au largage, le piston de déverrouillage 66 logé dans le cylindre est prévu pour actionner la libération de l'engin avant que les pistons d'éjection 64 ne poussent ledit engin.

Cela permet d'éviter de pousser l'engin avant sa libération. Une sollicitation inutile de l'ensemble de crochets 8 est évitée. Une perte d'énergie de poussée est également évitée. Le largage est plus efficace et réduit le risque d'endommager l'ensemble de crochet 8. En outre, comme la source de gaz sous pression actionnant le piston de déverrouillage 66 et les pistons d'éjection 64 est commune, l'ensemble pyrotechnique 6 est fiable et de structure simple. La temporisation du cycle de largage est sûre.

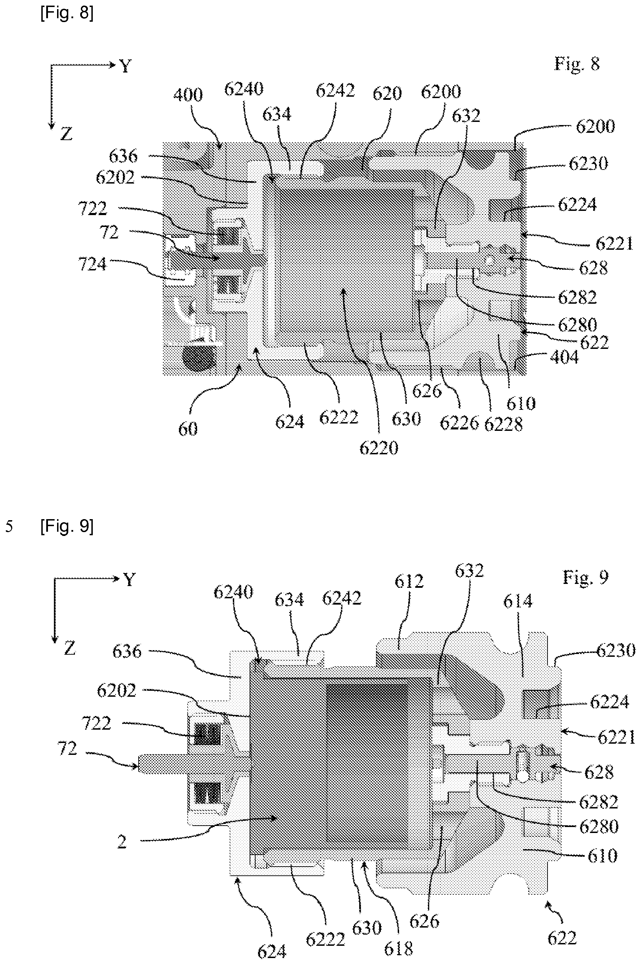

Les figures 7 et 8 montrent le corps 60 et l'indicateur 12 installé dans l'éjecteur 1.

La cartouche pyrotechnique 2 est en forme générale de révolution entre une première extrémité et une deuxième extrémité. La cartouche pyrotechnique 2 présente un rebord à la première extrémité. Le rebord est en général conformé en bourrelet extrémal et circonférentiel. La cartouche pyrotechnique 2 peut être conforme à la norme STANAG_3556_Ed_5.

Le corps 60 comprend, pour chaque adaptateur de cartouche 62, un évidement 620 formant logement. L'évidement 620 est usiné dans le corps 60. L'évidement 620 présente une extrémité ouverte 6200 et un fond 6202. L'évidement 620 est ici de forme générale cylindrique de révolution selon la direction Y. L'extrémité ouverte 6200 de l'évidement 620 est de même diamètre que l'ouverture 404 du longeron 400. L'extrémité ouverte 6200 de l'évidement 620 est en regard de l'ouverture 404 du longeron 400. L'extrémité ouverte 6200 et l'ouverture 404 du longeron 400 permettent l'accès à l'adaptateur de cartouche 62. Le fond 6202 est destiné à recevoir une extrémité de l'adaptateur de cartouche 62, ici la première extrémité.

L'adaptateur de cartouche 62 comprend une culasse 622 amovible. La culasse 622 est apte à être montée à l'extrémité ouverte 6200 de l'évidement 620 pour fermer l'évidement 620. La culasse 622 présente ici une forme générale de révolution selon la direction Y.

La culasse 622 comprend un boîtier central 618 et un bouchon 610 maintenus ensemble. Le boîtier central 618 et le bouchon 610 sont liés par une liaison pivot. Le boîtier central 618 reste stationnaire tandis que le bouchon 610 est vissé avec un taraudage du logement.

Le boîtier central 618 comprend une jupe 630 et une partie de tête 632, fixes l'un par rapport à l'autre et étanches aux gaz. La première jupe 630 et la partie de tête 632 définissent ensemble un premier volume 6220. La première jupe 630 et la partie de tête 632 sont ici d'un seul tenant. La partie de tête 632 et la première jupe 630 sont d'un seul tenant. La partie de tête 632 forme une surface annulaire à une extrémité de la première jupe 630 et s'étendant radialement vers l'intérieur à partir de la première jupe 630.

Le bouchon 610 comprend une jupe axiale 612 et une paroi radiale 614. La jupe axiale 612 comprend une extrémité libre et une extrémité liée à la paroi radiale 614 sur l'extérieur de ladite paroi radiale 614. La jupe axiale 612 et la paroi radiale 614 sont d'une pièce.

L'adaptateur de cartouche comprend une pièce de fond 624 prévue pour venir dans le fond du logement. La pièce de fond 624 est en forme de révolution autour d'un axe parallèle à l'axe du logement. La pièce de fond 624 comprend une partie radiale 636 et une chemise radiale 634 en forme de jupe. La partie radiale 636 et la chemise radiale 634 sont d'un seul tenant. La partie radiale 636 forme un disque annulaire à une extrémité de la chemise radiale 634 et s'étendant radialement vers l'intérieur à partir de la chemise radiale 634. La chemise radiale 634 est filetée. La chemise radiale 634 est capable de venir en prise avec la jupe 630. La chambre est formée par la pièce de fond 624 et le boîtier central 618 à l'état vissé ensemble.

Le bouchon 610 est conçu venir en prise avec la partie de tête 632, notamment par vissage, l'adaptateur de cartouche 62 étant apte à être séparé du corps 60 tout en conservant la cartouche pyrotechnique enfermée dans la chambre.

Le premier volume 6220 est de forme générale cylindrique complémentaire de la cartouche pyrotechnique 2. Le premier volume 6220 est apte à recevoir le corps d'une cartouche pyrotechnique 2.

La pièce de fond 624 est montée en contact avec le fond 6202 de l'évidement 620, par exemple par montage indexé. La pièce de fond 624 présente une forme générale de révolution selon la direction Y. La pièce de fond 624 forme avec la culasse les parois de la chambre 62.

La pièce de fond 624 est de structure et de matériau étanches aux gaz. La chemise radiale 634 et la partie radiale 636 définissent ensemble un deuxième volume 6240. Le deuxième volume 6240 est apte à recevoir la collerette de la cartouche la cartouche pyrotechnique 2. Le deuxième volume 6240 est de forme générale cylindrique complémentaire de la cartouche pyrotechnique 2. Le premier volume 6220 et le deuxième volume 6240 communiquent par la section transversale du premier volume 6220. Le premier volume 6220 présente un diamètre supérieur au diamètre du deuxième volume 6240. Plus précisément, le deuxième volume 6240 débouche entièrement dans le premier volume 6220.

La partie radiale 636 est en butée contre le fond de l'évidement 620. L'extrémité libre de la chemise radiale 634 est en regard de l'ouverture 6200 de l'évidement 620. La partie radiale 636 forme une butée contre laquelle la cartouche vient lorsqu'elle est insérée dans l'adaptateur de cartouche 62.

La culasse 622 présente au voisinage de l'extrémité libre de la première jupe 630 un filetage extérieur 6222. La pièce de fond 624 présente au voisinage de l'extrémité libre de la chemise radiale 634 un taraudage 6242. Le filetage 6222 et le taraudage 6242 coopèrent ensemble par vissage et permettent de visser la culasse 622 sur la pièce de fond 624. Lorsque la culasse 622 est vissée à la pièce de fond 624, le premier volume 6220 et le deuxième volume 6240 forment ensemble la chambre d'explosion.

Le picot de mise à feu 72 est supporté par la pièce de fond 624, notamment par la partie radiale 636. Le picot de mise à feu 72 est coaxial à l'adaptateur de cartouche 62. Le picot de mise à feu 72 est monté à translation par rapport à la pièce de fond 624 selon l'axe de l'adaptateur de cartouche 62. Le picot de mise à feu 72 est monté sur ressort 722, notamment des rondelles Belleville. Le ou les ressorts 722 maintiennent le picot de mise à feu 72 en position stable en précontrainte élastique contre la cartouche. Le picot de mise à feu 72 est commandé par un déclencheur électrique 724. Le déclencheur électrique 724 est disposé dans le corps 60 dans le fond de l'évidement 620. Le déclencheur électrique 724 est fixé au longeron 400. Le déclencheur électrique 724 est logé dans un perçage traversant le longeron entre le fond de l'évidement 620 et la première face latérale. Le déclencheur électrique 724 est configuré pour faire circuler un courant électrique dans la cartouche lors d'un tir déclenchant ainsi la mise à feu de la cartouche.

La course de translation du picot de mise à feu 72 est inférieure à la course linéaire de vissage selon l'axe de ladite translation : lors du début du vissage, le picot de mise à feu 72 est à distance de la cartouche, soit sans contact électrique, et lors du contact entre le picot de mise à feu 72 et la cartouche, l'adaptateur est tenu fermement en translation évitant une projection de l'adaptateur hors du logement. En cas de mise à feu accidentelle, les risques pour l'opérateur sont ainsi réduits. La poursuite du vissage après ledit contact réalise la compression du ressort 722 d'où la précontrainte.

En variante, l'adaptateur de cartouche 62 est dépourvu de pièce de fond 624. Le deuxième volume 6240 est formé directement par le corps 60 dans l'évidement 620.

La culasse 622 comprend une face extérieure 6221, visible depuis l'extérieur du bâti 4 lorsque la culasse 622 est vissée dans le logement. La culasse 622 comprend, sur la face extérieure 6221, une empreinte de manoeuvre 6224. L'empreinte de manoeuvre 6224 est accessible depuis l'extérieur du bâti 4. L'empreinte de manoeuvre 6224 permet à un opérateur extérieur de visser la culasse 622 associée à la pièce de fond 624, dans le corps 60 à l'aide d'une clef. L'empreinte de manoeuvre 6224 est ici conformée en un relief hexagonal.

L'évidement 620 peut comprendre un taraudage 6200 et la culasse 622 un filetage 6226 prévus pour venir en engagement. Le filetage 6226 est ménagé sur la surface extérieure du bouchon 610. Le taraudage 6200 et le filetage 6226 permettent de monter l'adaptateur de cartouche 62 sur la paroi de l'évidement 620.

A l'insertion d'une cartouche dans la chambre 6220, le bourrelet de la cartouche vient en butée contre l'extrémité libre de la première jupe 630 du boîtier central 618. La pièce de fond 624 est ensuite vissée sur le boîtier central 618 de la culasse 622 jusqu'à contact entre la pièce de fond 624 et la cartouche.

En présence d'une cartouche, la culasse 622 peut être vissée à la pièce de fond 624 jusqu'à une première profondeur, le bourrelet de cartouche faisant butée. En l'absence de cartouche, la culasse 622 peut être vissée à la pièce de fond 624 jusqu'à une deuxième profondeur supérieure à la première profondeur, par exemple jusqu'à ce que la culasse 622 vienne en butée contre la pièce de fond 624. En d'autres termes, l'adaptateur de cartouche 62 présente à l'état fermé, c'est-à-dire culasse 622 et pièce de fond 624 vissées, en présence de cartouche une longueur axiale supérieure à la longueur à l'état fermé, en absence de cartouche.

La culasse 622 est munie d'un orifice 626. L'orifice 626 relie fluidiquement l'intérieur de l'adaptateur de cartouche 62 au reste de l'ensemble pyrotechnique 6. Plus particulièrement, la chambre 6220 est en communication fluidique par l'orifice 626 avec une paroi extérieure axiale de l'adaptateur de cartouche dans le logement.

L'orifice 626 est formé dans la partie de tête 632 du boîtier central 618 de la culasse 622. L'orifice 626 peut comprendre une pluralité de perçages parallèles à l'axe de la culasse 622. L'orifice 626 débouche dans un conduit annulaire formé entre la partie de tête 632 et le bouchon 610. Ledit conduit annulaire débouche hors de l'adaptateur de cartouche autour de la première jupe 630. Un espace annulaire est prévu entre la première jupe 630 et la jupe axiale 612 du bouchon 610. La jupe axiale 612 du bouchon 610 entoure la première jupe 630. En regard de l'orifice 626 une gorge annulaire est ménagée dans la partie radiale du bouchon 610. La gorge annulaire présente une portion toroïdale de fond s'évasant radialement vers l'extérieur en une portion tronconique. La portion tronconique rejoint l'alésage de la jupe axiale 612. Ainsi, l'écoulement de gaz chauds issus de la cartouche est dévié vers l'extérieur de l'adaptateur de cartouche. Une éventuelle abrasion par les gaz chauds impacterait en premier lieu un ou des éléments de la culasse 622, aisément remplaçable.

En variante, l'orifice 626 est formé dans la première jupe 630 de la culasse 622.

Dans le mode de réalisation décrit ici, l'adaptateur de cartouche 62 comprend un indicateur de tir 628 renseignant sur un état de la cartouche pyrotechnique. L'état est soit tiré, soit non tiré. L'indicateur de tir 628 est ici agencé dans la culasse 622. Plus précisément, l'indicateur de tir 628 est monté dans le bouchon 610.

L'indicateur de tir 628 comprend ici une tige 6280. La tige 6280 est logée à translation dans un trou 6282 traversant la culasse 622, notamment la partie radiale du bouchon 610. Le trou 6282 s'étend du premier volume 6220 à la face extérieure 6221 de la culasse 622. Ici, le trou 6282 est un perçage sensiblement cylindrique coaxial à l'axe de la culasse 622. Le trou 6282 traverse la partie de tête 632 du boîtier central 618 et le bouchon 610.

La tige 6280 est mobile entre une première position (visible sur la figure 8) et une deuxième position. Dans la première position, la tige 6280 est sensiblement entièrement dans la culasse 622. Dans la deuxième position, la tige 6280 fait saillie de la face extérieure 6221 de la culasse 622.

La tige 6280 présente deux positions stables, lesdites première et deuxième positions. Les deux positions stables peuvent être assurées par un mécanisme à bille et ressort, la bille étant précontrainte élastiquement et montée à translation selon un axe perpendiculaire à l'axe de la tige. La bille peut être logée dans la tige et agir sur un bossage du bouchon 610 ou vice versa logée dans le bouchon 610 et agir sur un bossage de la tige. Le bossage est situé entre les deux positions stables.

Une extrémité intérieure de la tige 6280 est en contact fluidique avec la chambre 6220, tandis que l'extrémité opposée de la tige 6280 est visible depuis l'extérieur du bâti 4. Après mise en place d'une cartouche, la tige 6280 est mise par l'opérateur en première position. Une inflammation de la cartouche pyrotechnique 2 dégage des gaz. La pression des gaz agissant sur l'extrémité intérieure de la tige 6280 pousse la tige 6280 de la première position à la deuxième position. La tige 6280 fait saillie hors de culasse 622, indiquant ainsi qu'un tir a été effectué. La tige 6280 en saillie reste stable. La tige 6280 en saillie peut être repoussée à la main ou à l'aide d'un outil, par exemple un outil de serrage de l'adaptateur de cartouche, notamment lors du remplacement de la cartouche tirée par une cartouche neuve.

La culasse 622 est accessible depuis l'extérieur du bâti 4. L'indicateur de présence cartouche 12 est agencé l'adaptateur de cartouche 62 vissé dans le corps 60, comme visible sur la figure 7.

L'indicateur de présence cartouche 12 comprend, pour chaque culasse 622, une palette 120 respective. Chaque palette 120 est montée à pivotement par rapport à la direction Y autour d'un axe parallèle à l'axe de l'adaptateur de cartouche 62. Chaque palette 120 est mobile entre une première, une deuxième et une troisième positions. Chaque palette 120 est plus proche de l'axe de l'adaptateur de cartouche 62 respective en première position qu'en deuxième position. Chaque palette 120 est supportée par le corps 60. Chaque palette 120 est liée axialement au corps 60. Une translation de la palette par rapport au corps 60 est évitée. Ainsi le risque de dévissage et de perte de l'adaptateur de cartouche 62 au cours d'un vol est réduit.

La palette 120 est ici de forme générale plane. Ici, le longeron 400 de droite comprend une dépression 122. La palette 120 est montée dans la dépression 122. La palette 120 est en retrait ou affleurante de la deuxième face latérale 48. Un ergot de préhension peut être prévu en saillie pour améliorer l'ergonomie.

Chaque culasse 622, à la première profondeur, interdit la deuxième position à la palette 120 respective. Chaque culasse 622, à la deuxième profondeur, laisse libre en mouvement la palette 120 respective entre la première, la deuxième et la troisième positions.

Chaque palette 120 est mobile entre la deuxième position et une troisième position. Chaque palette 120 est plus proche de l'axe de l'adaptateur de cartouche 62 respectif en deuxième position qu'en troisième position. La palette 120 en troisième position est à distance de la culasse 622. La culasse 622 peut alors être vissée et dévissée. Lorsque la palette 120 est dans la première aussi bien que dans la deuxième position, l'indicateur de présence cartouche 12 empêche de dévisser la culasse 622.

La troisième position est une position non permanente de travail pour insérer ou ôter une cartouche. La deuxième position est située entre la première position et la troisième position. La palette 120 est précontrainte élastiquement vers la première position, notamment par un ressort de rappel. Une position stable autre que les première et deuxième positions est révélatrice d'un dysfonctionnement, par exemple vissage insuffisant de la culasse, présence d'un corps étranger, mauvais engagement des filets, etc.

La culasse 622 présente ici, sur la face extérieure 6221, un épaulement 6230. L'épaulement 6230 est cylindrique. L'épaulement 6230 est formé sur un bord extérieur du bouchon 610.

Lorsque la culasse 622 est à la première profondeur et que la palette 120 est libre de manipulation, la palette 120 est en appui sur l'épaulement 6230 respectif. L'épaulement 6230 interdit à la palette 120 la première position.

Lorsque la culasse 622 est à la deuxième profondeur, l'épaulement 6230 est enfoncé dans le corps 60 selon la direction Y. L'épaulement 6230, et plus généralement la culasse 622, laisse libre en mouvement la palette 120 respective vers la première position.

L'indicateur de présence cartouche 12 comprend pour chaque palette 120 deux marques 124, ici désignées par « NO » soit une absence de cartouche et « YES » soit une présence de cartouche, indiquant respectivement la première position et la deuxième position de la palette 120. La figure 7 partie de gauche montre la position « YES » ou deuxième position de la palette et figure 7 partie de gauche montre la position « NO » ou première position de la palette.

L'indicateur de présence cartouche 12 est utilisé afin de vérifier la présence d'une cartouche dans l'adaptateur de cartouche 62. La vérification, par un opérateur, comprend le premier groupe d'étapes suivant :
1a) soulever l'indicateur de présence cartouche 12 jusqu'à la troisième position
1b) visser l'adaptateur de cartouche 62 dans le logement du corps 60 jusqu'à venir en butée,
1c) relâcher l'indicateur de présence cartouche 12, et
1d) déterminer si l'indicateur de présence cartouche 12 a atteint la première position.

Si, à l'étape 1d, l'opérateur constate que l'indicateur de présence cartouche 12 a atteint la première position, alors il n'y a pas de cartouche dans l'adaptateur de cartouche 62. Si, à l'étape 1d, l'opérateur constate que l'indicateur de présence cartouche 12 ne peut pas atteindre la première position mais atteint la deuxième position, alors une cartouche est présente dans l'adaptateur de cartouche 62.

L'étape 1b peut être réalisée avec une clef dynamométrique ou un outil spécial plaçant l'indicateur de tir 628 en position rentrée.

La vérification est simple, et peu dangereuse pour l'opérateur.

Le chargement d'une cartouche comprend le deuxième groupe d'étapes suivant :
2a) déplacer la palette 120 de l'indicateur de présence cartouche 12 à la troisième position,
2b) retirer l'adaptateur de cartouche 62 hors du logement du corps 60 par dévissage,
2c) Dévisser la pièce de fond 624 la séparant ainsi de la culasse 622,
2c) insérer une cartouche dans la chambre 62,
2d) visser la pièce de fond 624 avec la culasse 622,
2e) soulever la palette 120 puis revisser l'adaptateur de cartouche 62 muni de la cartouche dans le logement du corps 60,
2f) relâcher la palette 120 laquelle se déplace en deuxième position.

L'étape 2c est exécutée en respectant les consignes de sécurité pyrotechniques applicables. L'étape 2d peut être réalisée à l'aide d'une clef dynamométrique, afin d'éviter un surcouple et pour garantir un effort d'un picot de mise à feu sur la cartouche. L'étape 2e est exécutée jusqu'à venir en butée.

Le deuxième groupe d'étapes et le premier groupe d'étapes sont espacés d'une durée indéterminée. Le chargement peut être réalisé par un premier opérateur bien avant un vol, tandis que la vérification est réalisée juste avant un vol, dans le cadre d'ultimes vérifications de routine avant une mission, afin de garantir que les adaptateurs de cartouche 62 ont bien été chargés d'une cartouche.

La vérification est en outre réalisée en retour de mission, afin de contrôler la présence d'une cartouche dans l'adaptateur de cartouche 62 avant ouverture de l'adaptateur de cartouche 62. La vérification de présence d'une cartouche comprend, le troisième groupe d'étapes suivant :
3a) si l'indicateur de présence cartouche 12 est dans la première position, dévisser et retirer l'adaptateur de cartouche 62, et terminer la vérification,
3b) si l'indicateur de présence cartouche 12 est à distance de la première position, en particulier en deuxième position, vérifier l'état de l'indicateur de tir 628, puis :
3c) si l'indicateur de tir 628 est dans l'état tiré, alors ouvrir la chambre pour retirer la cartouche tirée, sinon réaliser une procédure de retrait d'une cartouche non tirée, et terminer la vérification.

La procédure de retrait d'une cartouche non tirée comprend le fait d'équiper un opérateur de gants de protection pyrotechnique ou autres équipements de protection adéquats.

Ainsi, l'opérateur ouvre l'adaptateur de cartouche 62 équipé d'une protection pyrotechnique lorsqu'il reste une cartouche non tirée, et donc un risque non nul de déflagration.

L'invention permet ainsi à la fois de réaliser d'ultimes vérifications avant une mission, évitant un échec de mission pour cause d'absence de cartouche, mais également de simplifier et sécuriser les installations/désinstallations de cartouche.

## Revendications

1. Dispositif de convoyage et de largage aéronautique actionné par une cartouche pyrotechnique (2), ledit dispositif comprenant un ensemble pyrotechnique (6), ledit ensemble comprenant au moins :
- un corps (60) dans lequel est ménagé un logement, ledit corps (60) comprenant un évidement (620), l'évidement présentant une extrémité ouverte (6200) et un fond (6202), et
- un adaptateur de cartouche (62) apte à fermer l'évidement et formant une chambre pouvant loger la cartouche,
**caractérisé en ce que** :
- le dispositif comprend un indicateur (12) monté, sur une face extérieure du corps (60), mobile entre une première position et une deuxième position,
- l'adaptateur de cartouche (62) comprend une culasse (622) apte à être vissée dans le logement de sorte qu'
en présence de cartouche pyrotechnique, la culasse (622) peut être vissé jusqu'à une première profondeur où la culasse (622) vient en butée contre la cartouche pyrotechnique, la cartouche pyrotechnique étant en butée contre le fond de l'évidement, et
en l'absence de cartouche pyrotechnique, la culasse (622) peut être vissé jusqu'à une deuxième profondeur supérieure à la première profondeur, et
- la culasse (622) à la première profondeur interdit la première position à l'indicateur (12), tandis que la culasse (622) à la deuxième profondeur laisse libre en mouvement l'indicateur (12).

2. Dispositif selon la revendication 1, dans lequel l'adaptateur de cartouche (62) forme une butée pour un rebord de la cartouche pyrotechnique lorsque la culasse (622) est vissée à la première profondeur en présence de la cartouche pyrotechnique.

3. Dispositif selon la revendication 1 ou 2, la chambre présente deux extrémités opposées, l'une formée par un fond, l'autre formée par la culasse (622), une extrémité de la cartouche pyrotechnique venant en butée contre le fond lorsque la cartouche pyrotechnique est logée dans la chambre, la culasse (622) venant en butée contre l'extrémité opposée de la cartouche lorsque la culasse (622) est vissée à la première profondeur.

4. Dispositif selon l'une des revendications précédentes, dans lequel, en l'absence d'une cartouche, la culasse (622) peut être vissée en butée contre une pièce de fond (624) de l'adaptateur de cartouche (62).

5. Dispositif selon l'une des revendications précédentes, dans lequel l'indicateur (12) comprend une palette (120) montée à rotation dans le corps (60) à proximité de l'extrémité ouverte de l'évidement, la palette (120) étant de forme générale plane et montée dans un évidement ménagé dans une face extérieure du dispositif, en retrait ou affleurante.

6. Dispositif selon l'une des revendications précédentes, dans lequel la culasse (622) comprend un boîtier central (618) comprenant une première jupe (630) et une partie de tête (632), et un bouchon 610, et l'adaptateur de cartouche (62) comprend une pièce de fond (624) comprenant une partie radiale (636) et une deuxième jupe (634) apte à venir en prise avec la première jupe (630), pour former la chambre (6220), le bouchon 610 () étant apte à venir en prise avec la partie de tête (632), l'adaptateur de cartouche (62) étant apte à être séparé du corps tout en conservant la cartouche pyrotechnique.

7. Dispositif selon l'une des revendications précédentes, comprenant une portion d'éjection, apte à pousser un engin reçu par le dispositif lorsqu'une cartouche logée dans l'adaptateur de cartouche (62) est activée, et le fond de l'évidement ou de l'adaptateur de cartouche (62) comprend au moins un orifice (626) reliant l'adaptateur de cartouche (62) à la portion d'éjection.

8. Dispositif selon l'une des revendications précédentes, comprenant un indicateur (12) de tir renseignant sur un état tiré ou un état non tiré du dispositif.

9. Procédé de vérification d'un dispositif selon l'une des revendications précédentes, comprenant au moins le groupe d'étapes suivant :
1a) soulever l'indicateur (12) de présence cartouche (12)
1b) visser l'adaptateur de cartouche (62) dans le logement jusqu'à venir en butée,
1c) relâcher l'indicateur (12) de présence cartouche (12), et
1d) déterminer si l'indicateur (12) de présence cartouche (12) atteint la première position.

10. Procédé selon la revendication 9, comprenant, le groupe d'étapes suivant :
2a) déplacer l'indicateur (12) de présence cartouche (12) à une troisième position,
2b) retirer l'adaptateur de cartouche (62),
2c) ouvrir l'adaptateur de cartouche (62),
2c) insérer une cartouche dans la chambre (62), puis refermer l'adaptateur de cartouche (62),
2d) déplacer l'indicateur de présence cartouche (12), puis remonter l'adaptateur de cartouche (62) muni de la cartouche dans le logement,
2e) relâcher l'indicateur de présence cartouche (12)

11. Procédé selon la revendication 9, comprenant, le groupe d'étapes suivant :
3a) si l'indicateur de présence cartouche (12) est dans la première position, retirer l'adaptateur de cartouche (62), et terminer la vérification,
3b) si l'indicateur est à distance de la première position, en particulier en deuxième position, vérifier l'état de l'indicateur de tir (628), puis :
3c) si l'indicateur de tir est dans l'état tiré, alors retirer l'adaptateur de cartouche (62), ouvrir la chambre pour retirer la cartouche, sinon réaliser une procédure de retrait d'une cartouche non tirée, et terminer la vérification.

## Patentansprüche

1. Förder- und Abwurfvorrichtung für die Luftfahrt, die durch eine pyrotechnische Patrone (2) betätigt wird, wobei die Vorrichtung eine pyrotechnische Baugruppe (6) umfasst, wobei die Baugruppe mindestens Folgendes umfasst:
- einen Körper in dem ein Gehäuse ausgebildet ist, wobei der Körper (60) eine Aussparung (620) umfasst, wobei die Aussparung ein offenes Ende (6200) und einen Boden (6202) aufweist, und
- einen Patronenadapter (62), der geeignet ist, die Aussparung zu schließen und eine Kammer bildet, die die Patrone aufnehmen kann, **dadurch gekennzeichnet, dass**:
- die Vorrichtung einen Indikator (12) umfasst, der auf einer Außenseite des Körpers (60) zwischen einer ersten Position und einer zweiten Position beweglich ist,
- der Patronenadapter (62) ein Joch (622) umfasst, das in das Gehäuse geschraubt werden kann, so dass bei Vorhandensein einer pyrotechnischen Patrone das Joch (622) bis zu einer ersten Tiefe eingeschraubt werden kann, in der das Joch (622) an der pyrotechnischen Patrone anliegt, die pyrotechnische Patrone am Boden der Aussparung anliegt und bei Abwesenheit der pyrotechnischen Patrone das Joch (622) bis zu einer zweiten Tiefe eingeschraubt werden kann, die größer als die erste Tiefe ist, und
- das Joch (622) bei der ersten Tiefe die erste Tiefe die erste Position für den Indikator (12) verbietet, während das Joch (622) bei der zweiten Tiefe den Indikator (12) frei beweglich lässt.

2. Vorrichtung nach Anspruch 1, wobei der Patronenadapter (62) einen Anschlag für einen Rand der pyrotechnischen Patrone bildet, wenn das Joch (622) bei Vorhandensein der pyrotechnischen Patrone auf die erste Tiefe geschraubt wird.

3. Vorrichtung nach Anspruch 1 oder 2, wobei die Kammer zwei gegenüberliegende Enden aufweist, von denen eines durch einen Boden und das andere durch das Joch (622) gebildet wird, wobei ein Ende der pyrotechnischen Patrone am Boden anliegt, wenn die pyrotechnische Patrone in der Kammer untergebracht ist, und das Joch (622) am gegenüberliegenden Ende der Patrone anliegt, wenn das Joch (622) auf die erste Tiefe geschraubt wird.

4. Vorrichtung nach einem der vorhergehenden Ansprüche, wobei bei Fehlen einer Patrone das Joch (622) in Anschlag gegen ein Bodenstück (624) des Patronenadapters (62) geschraubt werden kann.

5. Vorrichtung nach einem der vorhergehenden Ansprüche, wobei der Indikator (12) eine Palette (120) umfasst, die drehbar im Körper (60) in der Nähe des offenen Endes der Aussparung angebracht ist, wobei die Palette (120) eine allgemein ebene Form hat und in einer Aussparung in einer Außenseite der Vorrichtung vertieft oder bündig angebracht ist.

6. Vorrichtung nach einem der vorhergehenden Ansprüche, wobei das Joch (622) ein zentrales Gehäuse (618) mit einer ersten Schürze (630) und einem Kopfteil (632) und einen Stopfen (610) umfasst und der Patronenadapter (62) ein Bodenstück (624) mit einem radialen Teil (636) und einer zweiten Schürze (634) umfasst, die geeignet ist, mit der ersten Schürze (630) in Eingriff zu treten, um die Kammer (6220) zu bilden, wobei der Stopfen (610) dazu geeignet ist, mit dem Kopfteil (632) in Eingriff zu kommen, wobei der Patronenadapter (62) dazu geeignet ist, vom Körper getrennt zu werden, während die pyrotechnische Patrone beibehalten wird.

7. Vorrichtung nach einem der vorhergehenden Ansprüche, die einen Auswurfabschnitt umfasst, der geeignet ist, ein von der Vorrichtung aufgenommenes Gerät zu schieben, wenn eine in dem Patronenadapter (62) untergebrachte Patrone aktiviert wird, und der Boden der Aussparung oder des Patronenadapters (62) mindestens eine Öffnung (626) umfasst, die den Patronenadapter (62) mit dem Auswurfabschnitt verbindet.

8. Vorrichtung nach einem der vorhergehenden Ansprüche, mit einem Schussindikator (12), der über einen geschossenen oder nicht geschossenen Zustand der Vorrichtung Auskunft gibt.

9. Verfahren zum Überprüfen einer Vorrichtung nach einem der vorhergehenden Ansprüche, das mindestens die folgende Gruppe von Schritten umfasst:
1a) Anheben des Indikators (12) für das Vorhandensein der Patrone (12)
1b) Schrauben des Patronenadapters (62) in das Gehäuse bis zum Anschlag,
1c) Loslassen des Indikators (12) für das Vorhandensein der Patrone (12), und
1d) Bestimmen, ob der Indikator (12) für das Vorhandensein der Patrone (12) die erste Position erreicht.

10. Verfahren nach Anspruch 9, umfassend die Gruppe von folgenden Schritten:
2a) Bewegen des Indikators (12) für das Vorhandensein der Patrone (12) in eine dritte Position,
2b) Entfernen des Patronenadapters (62),
2c) Öffnen des Patronenadapters (62),
2c) Einsetzen einer Patrone in die Kammer (62) und dann Schließen des Patronenadapters (62),
2d) Verschieben des Indikators für das Vorhandensein der Patrone (12) und dann Wiedereinsetzen des Patronenadapters (62) mit der Patrone in das Gehäuse,
2e) Loslassen des Indikators für das Vorhandensein der Patrone (12).

11. Verfahren nach Anspruch 9, umfassend die folgende Gruppe von Schritten:
3a) wenn sich der Indikator für das Vorhandensein einer Patrone (12) in der ersten Position befindet, Entfernen des Patronenadapters (62) und Beenden der Überprüfung,
3b) wenn der Indikator von der ersten Position entfernt ist, insbesondere in der zweiten Position, den Zustand des Schussindikators (628) überprüfen, dann:
3c) wenn sich der Schussindikator im geschossenen Zustand befindet, dann den Patronenadapter (62) entfernen, die Kammer öffnen, um die Patrone zu entfernen, andernfalls ein Verfahren zum Entfernen einer nicht geschossenen Patrone durchführen und die Überprüfung beenden.

## Claims

1. Aeronautical conveying and release device actuated by a pyrotechnic cartridge, said device comprising at least:
- a body (60) in which a housing is provided, said body (60) comprising a recess (620), the recess having an open end (6200) and a bottom (6202), and
- a cartridge adapter (62) capable of closing the recess and forming a chamber capable of housing the cartridge,
**characterized in that**:
- the device comprises an indicator (12) mounted, on an outer face of the body (60), movably between a first position and a second position,
- the cartridge adapter (62) comprises a bolt (622) capable of being screwed into the housing so that
in the presence of a pyrotechnic cartridge, the bolt (622) can be screwed to a first depth where the bolt (622) abuts against the pyrotechnic cartridge, the pyrotechnic cartridge being in abutment against the bottom of the recess, and
in the absence of a pyrotechnic cartridge, the bolt (622) can be screwed to a second depth greater than the first depth, and
- the bolt (622) at the first depth prohibits the first position for the indicator (12), while the bolt (622) at the second depth leaves the indicator (12) free to move.

2. Device according to claim 1, wherein the cartridge adapter (62) forms a stop for a rim of the pyrotechnic cartridge when the bolt (622) is screwed to the first depth in the presence of the pyrotechnic cartridge.

3. Device according to claim 1 or 2, wherein the chamber has two opposite ends, one formed by a bottom, the other formed by the bolt (622), one end of the pyrotechnic cartridge abutting against the bottom when the pyrotechnic cartridge is housed in the chamber, the bolt (622) abutting against the opposite end of the cartridge when the bolt (622) is screwed to the first depth.

4. Device according to one of the preceding claims, wherein, in the absence of a cartridge, the bolt (622) can be screwed in abutment against a bottom part (624) of the cartridge adapter (62).

5. Device according to one of the preceding claims, wherein the indicator (12) comprises a paddle (120) rotatably mounted in the body (60) near the open end of the recess, the paddle (120) having a flat overall shape and being mounted in a recess provided in an outer face of the device, set back or flush.

6. Device according to one of the preceding claims, wherein the bolt (622) comprises a central case (618) comprising a first skirt (630) and a head part (632), and a plug (610), and the cartridge adapter (62) comprises a bottom part (624) comprising a radial part (636) and a second skirt (634) capable of being coupled with the first skirt (630), to form the chamber (6220), the plug (610) being capable of being coupled with the head part (632), the cartridge adapter (62) being capable of being separated from the body while preserving the pyrotechnic cartridge.

7. Device according to one of the preceding claims, comprising an ejection portion, capable of pushing a projectile received by the device when a cartridge housed in the cartridge adapter (62) is activated, and the bottom of the recess or of the cartridge adapter (62) comprises at least one orifice (626) connecting the cartridge adapter (62) to the ejection portion.

8. Device according to one of the preceding claims, comprising a firing indicator (12) informing on a fired state or a non-fired state of the device.

9. Method for verifying a device according to one of the preceding claims, comprising at least the following group of steps:
1a) raising the cartridge presence indicator (12),
1b) screwing the cartridge adapter (62) into the housing until abutment,
1c) releasing the cartridge presence indicator (12), and
1d) determining whether the cartridge presence indicator (12) reaches the first position.

10. Method according to claim 9, comprising the following group of steps:
2a) moving the cartridge (12) presence indicator (12) into a third position,
2b) removing the cartridge adapter (62),
2c) opening the cartridge adapter (62),
2c) inserting a cartridge into the chamber (62), then closing the cartridge adapter (62),
2d) moving the cartridge presence indicator (12), then remounting the cartridge adapter (62) provided with the cartridge in the housing,
2e) releasing the cartridge presence indicator (12).

11. Method according to claim 9, comprising the following group of steps:
3a) if the cartridge presence indicator (12) is in the first position, removing the cartridge adapter (62), and ending the verification,
3b) if the indicator is at a distance from the first position, in particular in the second position, verifying the state of the firing indicator (628), then:
3c) if the firing indicator is in the fired state, then removing the cartridge adapter (62), opening the chamber to remove the cartridge, otherwise carrying out a procedure of removal of a non-fired cartridge, and ending the verification.
